# EUROPEAN PATENT SPECIFICATION

(11) **EP 3 650 154 B1**
(45) Date of publication and mention of the grant of the patent: **30.08.2023**
(21) Application number: 18842018.6
(22) Date of filing: 10.07.2018
(51) Int. Cl.: B23K 9/00, B23K 9/02, B23K 33/00

(54) **TANK MANUFACTURING METHOD, MIRROR PLATE OF TANK, AND TANK**
TANKHERSTELLUNGSVERFAHREN, SPIEGELPLATTE EINES TANKS UND TANK
PROCÉDÉ DE FABRICATION DE RÉSERVOIR, PLAQUE DE MIROIR DE RÉSERVOIR ET RÉSERVOIR

(30) Priority: 31.07.2017 JP 2017147763
(43) Date of publication of application: 13.05.2020
(73) Proprietor: Daikin Industries, Ltd., Osaka-shi, Osaka 530-8323 (JP)
(72) Inventor: SUSA, Toshihiro, Osaka-shi Osaka 530-8323 (JP); TAKASE, Tatsumi, Osaka-shi Osaka 530-8323 (JP); HARA, Hideki, Osaka-shi Osaka 530-8323 (JP)
(74) Representative: Hoffmann Eitle
(86) International application number: PCT/JP2018/026065
(87) International publication number: WO 2019/026568

(56) References cited:
- WO-A1-96/19385
- DE-A1-102008 024 715
- GB-A- 2 478 015
- JP-A- H11 267 831
- JP-A- H11 267 831
- JP-A- S62 296 969
- JP-A- 2002 340 186
- JP-A- 2010 203 697
- JP-A- 2015 051 448

## Description

### TECHNICAL FIELD

The present disclosure relates to a method for manufacturing a tank, an end plate of a tank, and a tank, and more particularly relates to a technique for improving the reliability of a joint where a cylindrical body and an end plate are joined together by welding.

### BACKGROUND ART

Various techniques relating to a tank including a cylindrical body and bowl-shaped end plates respectively jointed to openings of the cylindrical body at both ends thereof by welding (e.g., a hot water tank of a water heater) such as a structure and method for joining the body and the end plates together have been known in the art (see, for example, JP 1619638 and JP 2593233).

JP 1619638 discloses a structure in which an end portion of an end plate is bent inward so as to be tapered, and is inserted into, and welded to, an end portion of a body from the outside.

JP 2593233 discloses a structure in which an end portion of an end plate is bent outward to form a tapered portion, and an end portion of a body is inserted into, and welded to, the tapered portion. In JP 2593233, the tapered portion is melted by welding so that the end portion of the end plate and the end portion of the body butt each other.

GB 2 478 015 A discloses a process for forming a thin walled cylinder. The cylinder comprises a cylindrical body and end cap, where the cylindrical body has at least an end cap meeting edge and the end cap has at least a body meeting edge. The process comprises the steps of forming the end cap meeting edge of the cylindrical body inwardly to decrease its diameter relative to the remainder of the cylindrical body, forming a lip in the end cap meeting edge, and welding the so formed end cap meeting edge with the body meeting edge of the end cap. The lip forms filler material for the welding of the end cap meeting edge with the body meeting edge. Preferably, the thin walled cylinder is a closed hot water pressurised cylinder having a cylindrical body thickness in the range 0.5-1.5 mm. The end cap may comprise a dome having a circular bottom edge.

DE 10 2008 024715 A1 discloses a steel hot water tank that has a base which is welded to the body. A barrier is positioned along the weld line which prevents welding residues or sputter from falling into the tank. Furthermore, DE 10 2008 024715 A1 discloses a method for making the tank in which the barrier is formed on the tank base or body and a cavity is formed allowing the base to be fitted inside the rim of the body.

### SUMMARY OF THE INVENTION

### TECHNICAL PROBLEM

In JP 1619638, since the tapered end portion of the end plate remains inside a tank, water remaining in the clearance between the end portion of the body and the tapered end portion may cause corrosion of the tank. Further, since the tapered end portion remains, an external force applied to the tank facilitates stress concentration.

In JP 2593233, if the diameter of the end portion of the body is smaller than that of the end portion of the end plate, the body enters the end plate. This makes it difficult to weld the body and the end plate together in their correct relative positions. If the inclined body is inserted into the end plate, the body enters the end plate. This also makes it difficult to weld the body and the end plate together in their correct relative positions.

It is an object of the present disclosure to reduce corrosion and stress concentration caused by clearance in a tank including a body and an end plate that are joined together by welding, and to prevent a problem in which the end plate and the body are not welded together in their correct relative positions.

### SOLUTION TO THE PROBLEM

A first aspect of the present disclosure is premised on a method for manufacturing a tank (1). The tank (1) includes a cylindrical body (10) having an end portion (11), and an end plate (20) having an end portion (21). The end portion (11) of the cylindrical body (10) and the end portion (21) of the end plate (20) are joined together by welding.

In this method, one of the body (10) and the end plate (20) is defined as a first member (20), and the other one is defined as a second member (10). The end portion (21) of the first member (20) has a concave portion (31) and a protrusion (32). The concave portion (31) is formed such that a distance between an inner surface and a center (C) of the first member (20) is shorter than a radius (r2) of an inner peripheral surface of the end portion (11) of the second member (10). The protrusion (32) is formed such that an open end (22) of the first member (20) protrudes outward beyond an outer peripheral surface of the end portion (11) of the second member (10). The method includes: an abutting step of making the end portion (21) of the first member (20) and the end portion (11) of the second member (10) abut against each other; and a joining step of welding portions of the first and second members (20) and (10) abutting against each other together. The abutting step and the joining step are sequentially performed.

Further, the end plate (20) is a member having a beading portion (38) configured as a projection bulging radially outward at a position opposite to the protrusion (32) with respect to the concave portion (31). Accordingly, the beading portion (38) is used as the positioning portion (33) used to fit the end plate (20) to a welding system that has been used in the art.

In the first aspect, in the abutting step, the end portion (21) of the first member (20) having the concave portion (31) and the protrusion (32), and the end portion (21) of the first member (20) are made to abut against each other. Then, performing the joining step in this state allows the portions of the first and second members (20) and (10) abutting against each other to be joined together by welding. Further, the concave portion (31) of the first member (20) is formed such that the distance (D) between the inner surface and center (C) of the first member (20) is shorter than the radius (r2) of the inner peripheral surface of the associated end portion (11) of the second member (10). This can substantially prevent the associated end portion (11) of the second member (10) from entering the first member (20). Since the second member (10) does not have any tapered end portion inserted into the first member (20), no tapered end portion remains in the first member (20).

A second aspect of the present disclosure is an embodiment of the first aspect. In the second aspect, the joining step is performed through melting of the protrusion (32) of the first member (20) during welding.

In this second aspect, the protrusion (32) of the first member (20) is melted in the joining step, thereby joining the first and second members (20) and (10) together by welding.

A third aspect of the present disclosure is an embodiment of the first or second aspect. In the third aspect, the end portion (21) of the first member (20) includes a positioning portion (33) configured to align the first member (20) with the second member (10).

In this third aspect, in the abutting step, the positioning portion (33) of the end portion (21) of the first member (20) aligns the first and second members (20) and (10) with each other. Then, the joining step is performed in a state where the first and second member (20) and (10) are aligned with each other, thereby joining the first and second members (20) and (10) together by welding.

A fourth aspect of the present disclosure is an embodiment of the third aspect. In the fourth aspect, the positioning portion (33) of the end portion (21) of the first member (20) is an angle changing portion (34) having a first portion (33a) radially inside the outer peripheral surface of the end portion (11) of the second member (10), and a second portion (33b) radially outside the outer peripheral surface. The first and second portions (33a) and (33b) have different inclination angles.

In this fourth aspect, the angle changing portion (34) provided as the positioning portion (33) of the end portion (21) of the first member (20) aligns the first and second members (20) and (10) with each other. Then, the joining step is performed in a state where the first and second member (20) and (10) are aligned with each other, thereby joining the first and second members (20) and (10) together by welding.

A sixth aspect of the present disclosure is an embodiment of the fifth aspect (see below).

The concave portion (31) is formed on the end plate (20), the concave portion (31) is formed on an end portion (21) of the end plate (20), such that a distance (D) between an inner surface and a center (C) of the end portion (21) is shorter than a radius (r2) of an inner peripheral surface of the end portion (11) of the body (10). The end portion (21) includes a protrusion (32) formed such that an open end (22) of the end portion (21) of the end plate (20) protrudes outward beyond an outer peripheral surface of the end portion (11) of the body (10).

In this sixth aspect, since the end plate (20) has the concave portion (31) and the protrusion (32), the end portion (11) of the body (10) can be substantially prevented from entering the end plate (20) when the end plate (20) and the body (10) are joined together, just like the first aspect. Since the body (10) does not have to have any tapered end portion inserted into the end plate (20), no tapered end portion remains in the end plate (20).

A seventh aspect of the present disclosure is an embodiment of the sixth aspect. In the seventh aspect, the end portion (21) of the end plate (20) includes a positioning portion (33) configured to align the end plate with the body (10).

An eighth aspect of the present disclosure is an embodiment of the seventh aspect. In the eighth aspect, the positioning portion (33) of the end portion (21) of the end plate (20) is an angle changing portion (34) having a first portion (33a) radially inside the outer peripheral surface of the end portion (11) of the body (10), and a second portion (33b) radially outside the outer peripheral surface. The first and second portions (33a) and (33b) have different inclination angles.

Operations of the seventh and eighth aspects are similar to those of the third and fourth aspects.

A fifth aspect of the present disclosure is premised on a tank including: a cylindrical body (10); and an end plate (20) configured to close an end portion (11) of the body (10).

The tank has a concave portion (31) formed near a boundary between the body (10) and the end plate (20) so as to be extended radially inward from an outer peripheral surface of the body (10) or the end plate (20).

Further, in the fifth aspect, the end plate (20) has a beading portion (38) configured as a projection bulging radially outward from the outer peripheral surface of the end plate (20).

### ADVANTAGES OF THE INVENTION

According to the first aspect, the second member (10) has no tapered end portion inserted into the first member (20). Thus, no tapered end portion remains inside the tank (1). This prevents water remaining in clearance between the tank (1) and a tapered end portion from causing the tank (1) to corrode. Further, since no tapered end portion remains therein, stress concentration caused by an external force applied to the tank can also be reduced.

Further, the concave portion (31) of the first member (20) serving as the end plate (20), for example, is formed such that the distance (D) between the inner surface and center (C) of the first member (20) is shorter than the radius (r2) of the inner peripheral surface of the associated end portion (11) of the second member (10) serving as the body (10), for example. This can substantially prevent the associated end portion (11) of the second member (10) (the body (10)) from entering the first member (20) (the end plate (20)). Since, as described above, the second member (10) does not enter the first member (20), the first and second members (20) and (10) are easily welded together in their correct relative positions. Even if the inclined first member (20) is inserted into the second member (10), the concave portion (31) functions to move the first and second members (20) and (10) back to the correct relative positions in the abutting step. This can reduce poor welds in the joining step.

Further, according to the first aspect, using the beading portion (38) as the positioning portion (33) of the end plate (20) fitted to a welding system allows the end plate (20) to be easily positioned in the welding system that has been used in the art. This eliminates the need for providing a new positioning structure for the welding system or the end plate (20).

According to the second aspect, the protrusion (32) of the first member (20) is melted in the joining step, thereby joining the first and second members (20) and (10) together by welding. This eliminates the need for using a filler rod, leading to a cost reduction.

According to the third aspect, the end portion (21) of the first member (20) has the positioning portion (33) configured to align the first and second members (20) and (10) with each other. This allows the first and second members (20) and (10) to be easily aligned with each other in the abutting step. Then, performing the joining step in this state can easily improve the quality of the joint.

According to the fourth aspect, the end portion (21) of the first member (20) has the angle changing portion (34) as the positioning portion (33) configured to align the first and second members (20) and (10) with each other. This allows the first and second members (20) and (10) to be easily aligned with each other in the abutting step with a simple configuration. Then, performing the joining step in this state can easily improve the quality of the joint.

According to the sixth aspect, the body (10) does not have to have any tapered end portion inserted into the end plate (20). Thus, no tapered end portion remains inside the end plate (20). This prevents water remaining on the tapered end portion inside the tank (1) from causing the tank (1) to corrode. Further, since no tapered end portion remains therein, the tank (1) including the end plate (20) can also reduce stress concentration caused by an external force applied to the tank (1).

Further, the concave portion (31) of the end plate (20) is designed to be shorter than the radius (r2) of the inner peripheral surface of the associated end portion (11) of the body (10). This can substantially prevent the associated end portion (11) of the body (10) from entering the end plate (20). Thus, using the end plate (20) makes it easy to weld the end plate (20) and the body (10) together in their correct relative positions.

Advantages of the seventh and eighth aspects are similar to those of the third and fourth aspects.

### BRIEF DESCRIPTION OF THE DRAWINGS

[FIG. 1] FIG. 1 is a front view illustrating a hot water supply tank according to an embodiment.
[FIG. 2] FIG. 2 is an exploded perspective view of the hot water supply tank illustrated in FIG. 1.
[FIG. 3] FIG. 3 is a cross-sectional view showing an abutting step in a method for manufacturing a hot water supply tank according to the embodiment.
[FIG. 4] FIG. 4 is a cross-sectional view showing a joining step in the method for manufacturing a hot water supply tank according to the embodiment.
[FIG. 5] FIG. 5 is a cross-sectional view showing a joint after the joining step in the method for manufacturing a hot water supply tank according to the embodiment.
[FIG. 6] FIG. 6 is a schematic view of a welding system implementing the method for manufacturing a hot water supply tank according to the embodiment.
[FIG. 7] FIG. 7 is a schematic view showing a state in which a body and an end plate of a hot water supply tank are to be fitted to the welding system shown in FIG. 6.
[FIG. 8] FIG. 8 is a schematic view showing an abutting step performed in the welding system shown in FIG. 6.
[FIG. 9] FIG. 9 is a schematic view showing a joining step performed in the welding system shown in FIG. 6.

### DESCRIPTION OF EMBODIMENTS

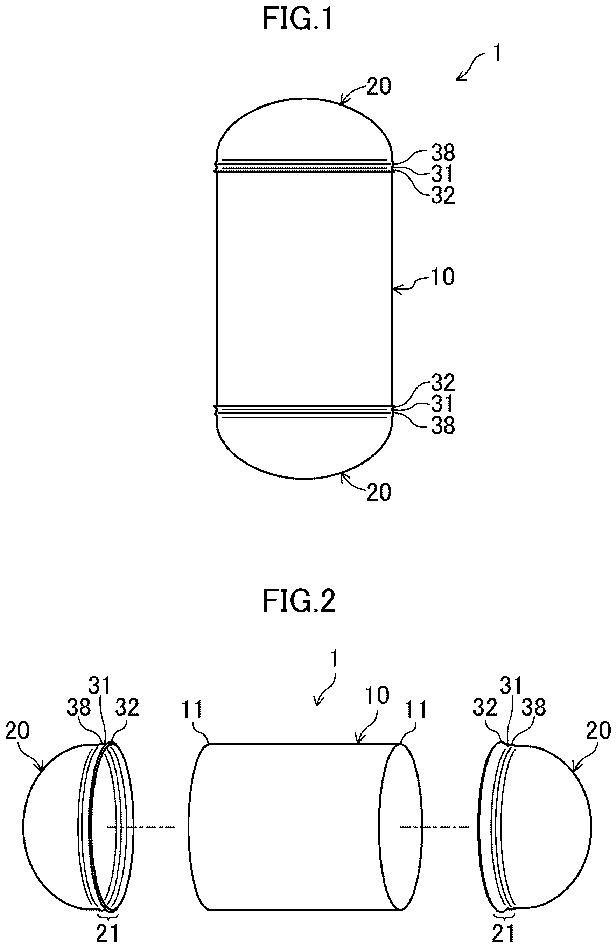

An embodiment will be described in detail with reference to the drawings. This embodiment relates to a hot water supply tank (1) including a body (10) having two ends respectively closed with end plates (20), and a method for manufacturing the hot water supply tank (1). FIG. 1 is a front view of the hot water supply tank (1) according to the embodiment, FIG. 2 is an exploded perspective view of the hot water supply tank (1) illustrated in FIG. 1, and FIGS. 3 to 9 show steps in the method for manufacturing the hot water supply tank (1).

The hot water supply tank (1) according to this embodiment includes a cylindrical body (a second member) (10), and two end plates (first members) (20) closing the respective ends of the body. A concave portion (31) is formed near the boundary between the body (10) and each of the end plates (20) so as to be concaved radially inward from the outer peripheral surface of the end plate (20). In this embodiment, the concave portion (31) is formed around the entire periphery of the end plate (20).

The body (10) is a straight cylindrical member having two open ends (11).

In this embodiment, r1 is equal to r2, where r1 represents the radius of the inner peripheral surface of each end plate (20), and r2 represents the radius of the inner peripheral surface of the body (10). Each end plate (20) has an end portion (21) having the concave portion (31) and a protrusion (32). The concave portion (31) is formed such that the distance (D) between an inner surface (31a) of the end plate (20) and the centerline (C) of the tank (1) is shorter than the radius (r2) of the inner peripheral surface (10a) of the associated end portion (11) of the second member (10). The protrusion (32) is formed such that an open end (22) of the first member (20) protrudes outward beyond an outer peripheral surface (10b) of the associated end portion (11) of the second member (10).

The end portion (21) of the end plate (20) includes a positioning portion (33) configured to align the end plate (20) with the body (10). The positioning portion (33) of the end portion (21) of the end plate (20) is configured as an angle changing portion (34) having a first portion (33a) radially inside the outer peripheral surface (10b) of the associated end portion (11) of the body (10), and a second portion (33b) radially outside the outer peripheral surface (10b). The first and second portions (33a) and (33b) have different inclination angles. For example, the second portion (33b) is inclined at an angle of 45° with respect to the centerline (C) of the hot water supply tank (1), and the first portion (33a) has a larger inclination angle than that of the second portion (33b). Thus, the corner between the first and second portions (33a) and (33b) serves as the positioning portion (33), which can align the center of the body (10) with the center of the end plate (20).

Each end plate (20) of the hot water supply tank (1) has a beading portion (38) configured as a projection bulging radially outward from the outer peripheral surface of the end plate (20).

The end plate (20) has the beading portion (38) configured as the projection bulging radially outward at a position opposite to the protrusion (32) with respect to the concave portion (31). The beading portion (38) is used to position the end plate (20) in a welding system (50) described below, in which the body (10) and the end plate (20) are mounted.

### - Method for Manufacturing Hot Water Supply Tank -

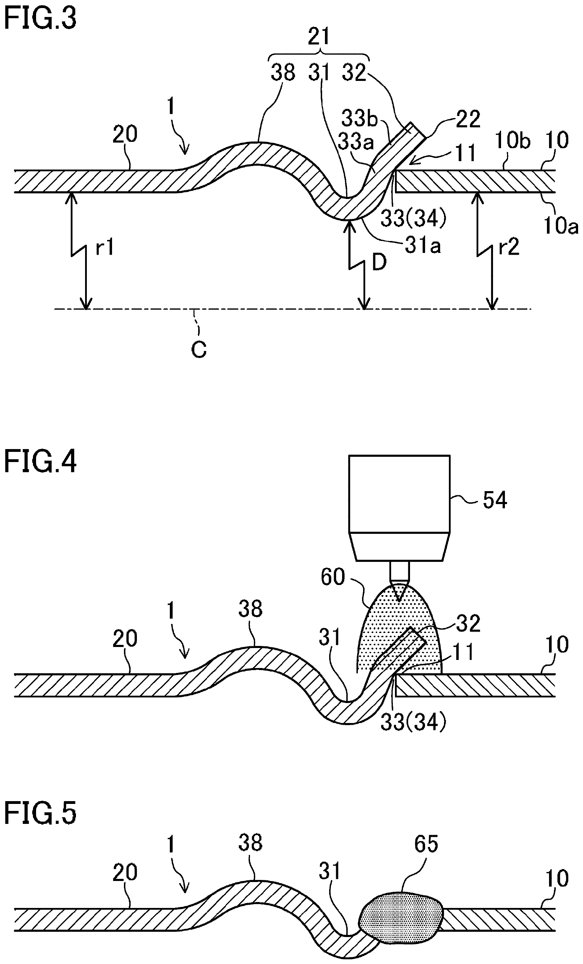

Next, a method for manufacturing the hot water supply tank (1) will be described with reference to FIGS. 3 to 9.

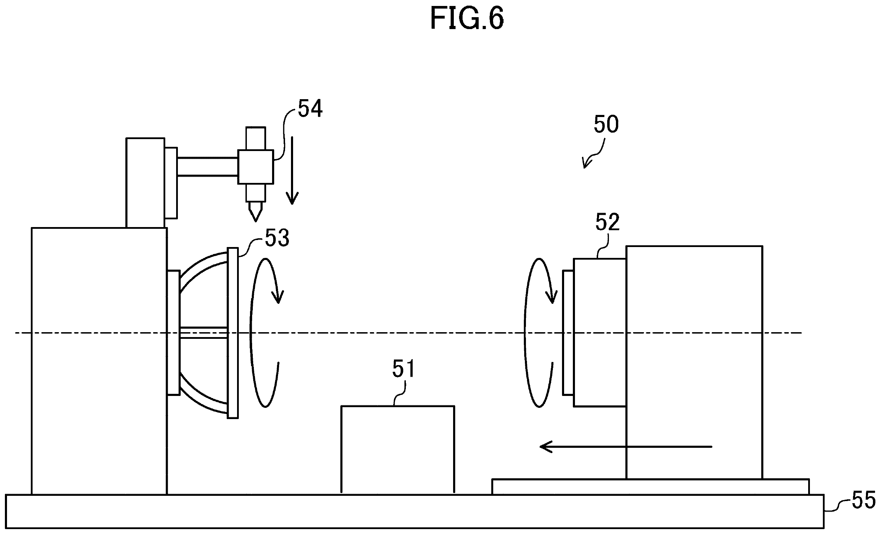

Here, FIG. 6 is a schematic view of an example of the welding system (50) implementing the method for manufacturing the hot water supply tank (1) according to this embodiment. This welding system (50) includes a body introduction jig (51) retaining the body (10) of the hot water supply tank (1), a body pressing jig (52) having the function of pressing the body (10) against one of the end plates (20), an end plate attachment jig (53) retaining the end plate (20), and a welding torch (54) for welding the body (10) and an abutting portion of the end plate (20) together by arc welding. These components are provided on a base (55), the end plate attachment jig (53) is configured to be rotatable around the centerline of the hot water supply tank (1), and the body pressing jig (52) is configured to be movable forward and backward along the centerline of the hot water supply tank (1) and to be rotatable around the centerline of the hot water supply tank (1).

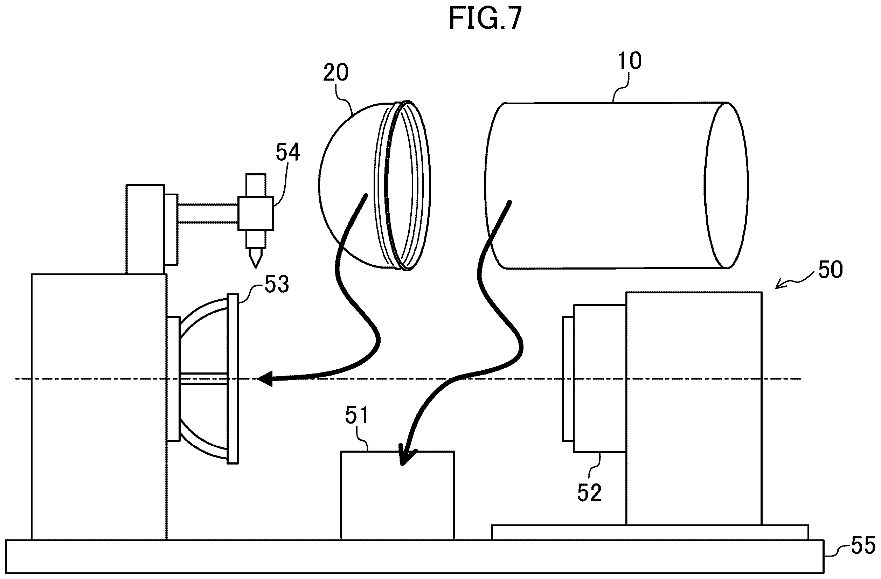

FIG. 7 shows a state in which the body and the end plate of the hot water supply tank are to be fitted to the welding system shown in FIG. 6. As shown in FIG. 7, the end plate (20) is fitted to the end plate attachment jig (53), and the body (10) is placed on the body introduction jig (51).

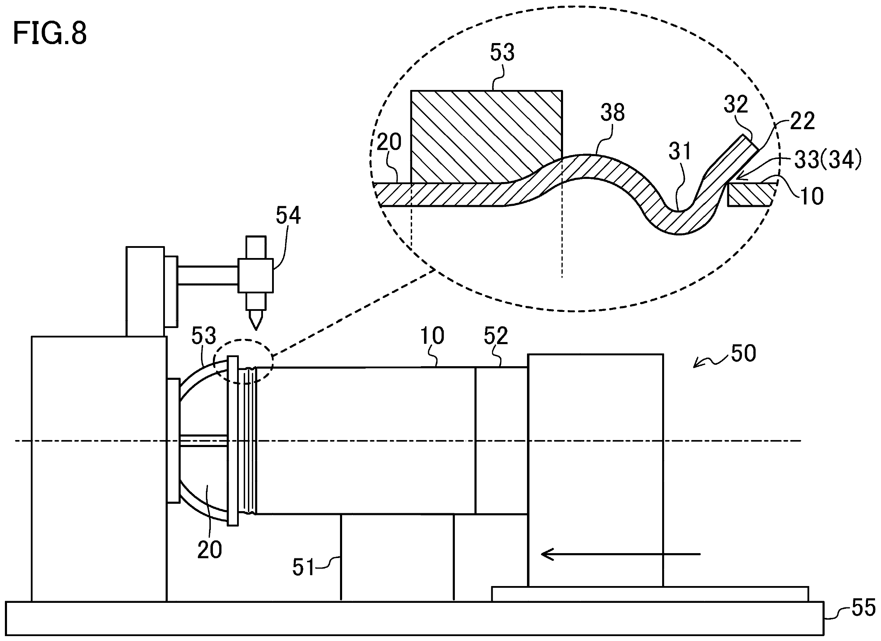

Next, as shown in FIG. 8, the body pressing jig (52) moves forward toward the end plate (20) to make the end plate (20) and the body (10) abut against each other. That is to say, this process step is an abutting step (see also FIG. 3) of making the end portion (21) of the end plate (20) and the end portion (11) of the body (10) abut against each other. At this time, the beading portion (38) of the end plate (20) brought into contact with the end plate attachment jig (53) allows the end plate (20) to be positioned at an accurate position along the centerline of the hot water supply tank (1). Further, as shown in FIG. 3, the end portion (11) of the body (10) is positioned by the angle changing portion (34) as the positioning portion (33), thereby aligning the body (10) with the end plate (20) (to align the centers of the body (10) and the end plate (20) with each other).

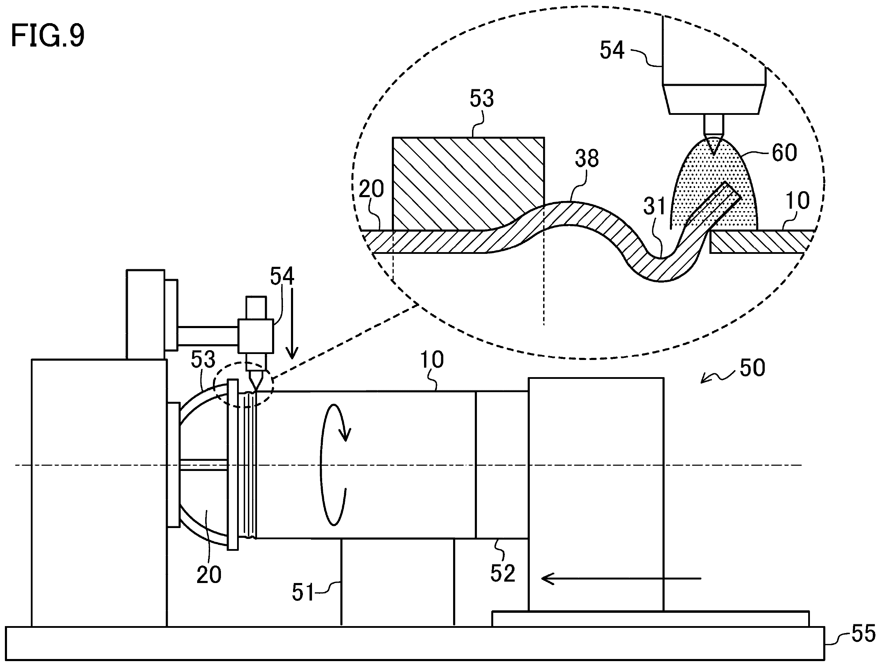

Next, as shown in FIG. 9, in the state where the welding torch (54) has moved downward, the end plate attachment jig (53) and the body pressing jig (52) rotate synchronously. As shown in FIG. 4, a voltage applied to the welding torch (54) allows an arc discharge portion (60) to be formed from the welding torch (54) toward portions of the end plate (20) and the body (10) abutting each other. Thus, a joining step is performed to weld the portions of the end plate (20) and the body (10) abutting against each other together. In this joining step, no filler rod is used, and the protrusion (32) of the end plate (20) is melted using the arc discharge portion (60), thereby joining the end plate (20) and the body (10) together. FIG. 5 is a cross-sectional view showing a state where the joining step has been completed. In this state, a portion of the end plate (20) that was originally the protrusion (32) turns into a welding bead (65), and nothing projects outward from the hot water supply tank (1).

### - Advantages of Embodiment -

According to this embodiment, the body (10) has no tapered end portion inserted into the associated end plate (20). Thus, no tapered end portion remains inside the hot water supply tank (1). This prevents water remaining in clearance between the hot water supply tank (1) and a tapered end portion from causing the hot water tank (1) to corrode. Further, since no tapered end portion remains therein, stress concentration caused by an external force applied to the tank can also be reduced.

Further, the distance (D) between the inner surface of the concave portion of the end plate (20) and the center of the end plate (20) is designed to be shorter than the radius (r2) of the inner peripheral surface of the associated end portion of the body (10). This can substantially prevent the associated end portion of the body (10) from entering the end plate (20). Since, as described above, the body (10) does not enter the end plate (20), the end plate (20) and the body (10) are easily welded together in their correct relative positions. Even if the inclined body (10) is inserted into the end plate (20), the concave portion (31) functions to move the end plate (20) and the body (10) back to the correct relative positions in the abutting step. This can reduce poor welds in the joining step.

According to this embodiment, the protrusion (32) of the end plate (20) is melted in the joining step, thereby joining the end plate (20) and the body (10) together by welding. This eliminates the need for using a filler rod, leading to a cost reduction.

Furthermore, according to this embodiment, the end portion of the end plate (20) has the angle changing portion (34) as the positioning portion (33) for aligning the end plate (20) and the body (10) with each other. This allows the end plate (20) and the body (10) (the second member) to be simply and easily aligned with each other in the abutting step. Then, performing the joining step in this state can easily improve the quality of the joint.

Further, according to this embodiment, using the beading portion (38) as a positioning portion of the end plate (20) fitted to the welding system allows the end plate (20) to be easily positioned in the welding system (50) that has been used in the art. This eliminates the need for providing a new positioning structure for the welding system or the end plate.

### «Other Embodiments»

The foregoing embodiment may be modified as follows.

In the foregoing embodiment, an example in which the present disclosure is used for a hot water supply tank has been described. However, the present disclosure may be used for a tank other than a hot water supply tank.

In the foregoing embodiment, the concave portion (31) and the protrusion (32) may be formed on the end portion (21) of the end plate (20). However, they may be formed on the end portion (11) of the body (10). Further, the concave portion (31) and the protrusion (32) may be formed not around the entire periphery of the end plate (20) or the body (10) but on a portion of the periphery of the end plate (20) or the body (10). Since the beading portion (38) is a positioning portion relative to the end plate attachment jig (53), the end plate (20) always has the beading portion (38).

In the foregoing embodiment, a configuration in which the radius r1 of the inner peripheral surface of the end plate (20) and the radius r2 of the inner peripheral surface of the body (10) are equal to each other has been described. However, the radii r1 and r2 do not necessarily have to be equal to each other.

In the foregoing embodiment, melting the protrusion (32) in the joining step eliminates the need for a filler rod. However, it is needless to say that welding may be performed using a filler rod.

Note that the foregoing description of the embodiments is a merely preferred example in nature, and is not intended to limit the scope, application, or uses of the present disclosure.

### INDUSTRIAL APPLICABILITY

As can be seen from the foregoing description, the present disclosure is useful for a method for manufacturing a tank, an end plate of a tank, and a tank.

### DESCRIPTION OF REFERENCE CHARACTERS

- 1: Hot Water Supply Tank (Tank)
- 10: Second Member (Body)
- 11: End Portion
- 20: First Member (End Plate)
- 21: End Portion
- 22: Open End
- 31: Concave Portion
- 32: Protrusion
- 33: Positioning Portion
- 33a: First Portion
- 33b: Second Portion
- 34: Angle Changing Portion
- 38: Beading Portion

## Claims

1. A method for manufacturing a tank (1), the tank (1) including a cylinder body (10) having an end portion (11), and an end plate (20) having an end portion (21), the end portion (11) of the cylinder body (10) and the end portion (21) of the end plate (20) being joined together by welding,
one of the body (10) and the end plate (20) being defined as a first member (20), the other one being defined as a second member (10),
the end portion (21) of the first member (20) having a concave portion (31) and a protrusion (32), the concave portion (31) being formed such that a distance between an inner surface and a center (C) of the first member (20) is shorter than a radius (r2) of an inner peripheral surface of the end portion (11) of the second member (10), the protrusion (32) being formed such that an open end (22) of the first member (20) protrudes outward beyond an outer peripheral surface of the end portion (11) of the second member (10), the method comprising:
an abutting step of making the end portion (21) of the first member (20) and the end portion (11) of the second member (10) abut against each other; and
a joining step of welding portions of the first and second members (20) and (10) abutting against each other together,
the abutting step and the joining step being sequentially performed,
wherein
the end plate (20) is a member having a beading portion (38) configured as a projection bulging radially outward at a position opposite to the protrusion (32) with respect to the concave portion (31).

2. The method of claim 1, wherein
the joining step is performed through melting of the protrusion (32) of the first member (20) during welding.

3. The method of claim 1 or 2, wherein
the end portion (21) of the first member (20) includes a positioning portion (33) configured to align the first member (20) with the second member (10).

4. The method of claim 3, wherein
the positioning portion (33) of the end portion (21) of the first member (20) is an angle changing portion (34) having a first portion (33a) radially inside the outer peripheral surface of the end portion (11) of the second member (10), and a second portion (33b) radially outside the outer peripheral surface, the first and second portions (33a) and (33b) having different inclination angles.

5. A tank comprising:
a cylindrical body (10); and
an end plate (20) configured to close an end portion (11) of the body (10),
a concave portion (31) being formed near a boundary between the body (10) and the end plate (20) so as to be concaved radially inward from an outer peripheral surface of the body (10) or the end plate (20),
**characterized in that**
the end plate (20) has a beading portion (38) configured as a projection bulging radially outward from the outer peripheral surface of the end plate (20).

6. The tank of claim 5, wherein
the concave portion (31) is formed on the end plate (20),
the concave portion (31) is formed on an end portion (21) of the end plate (20), such that a distance (D) between an inner surface and a center (C) of the end portion (21) is shorter than a radius (r2) of an inner peripheral surface of the end portion (11) of the body (10),
**characterized in that**
the end portion (21) includes a protrusion (32) formed such that an open end (22) of the end portion (21) of the end plate (20) protrudes outward beyond an outer peripheral surface of the end portion (11) of the body (10).

7. The tank of claim 6, wherein
the end portion (21) of the end plate (20) includes a positioning portion (33) configured to align the end plate with the body (10).

8. The tank of claim 7, wherein
the positioning portion (33) of the end portion (21) of the end plate (20) is an angle changing portion (34) having a first portion (33a) radially inside the outer peripheral surface of the end portion (11) of the body (10), and a second portion (33b) radially outside the outer peripheral surface, the first and second portions (33a) and (33b) having different inclination angles.

## Patentansprüche

1. Verfahren zum Herstellen eines Tanks (1), wobei der Tank (1) einen Zylinderkörper (10) einschließt, der einen Endabschnitt (11) aufweist, und eine Endplatte (20), die einen Endabschnitt (21) aufweist, wobei der Endabschnitt (11) des Zylinderkörpers (10) und der Endabschnitt (21) der Endplatte (20) durch Verschweißen miteinander verbunden werden,
wobei eines von dem Körper (10) und der Endplatte (20) als ein erstes Element (20) und das andere als ein zweites Element (10) definiert ist,
wobei der Endabschnitt (21) des ersten Elements (20) einen konkaven Abschnitt (31) und einen Vorsprung (32) aufweist, wobei der konkave Abschnitt (31) so ausgebildet ist, dass ein Abstand zwischen einer inneren Oberfläche und einem Mittelpunkt (C) des ersten Elements (20) kürzer ist als ein Radius (r2) einer inneren Umfangsoberfläche des Endabschnitts (11) des zweiten Elements (10), wobei der Vorsprung (32) so ausgebildet ist, dass ein offenes Ende (22) des ersten Elements (20) nach außen über eine äußere Umfangsoberfläche des Endabschnitts (11) des zweiten Elements (10) hinaus vorspringt, wobei das Verfahren Folgendes umfasst:
einen Anstoßschritt, bei dem der Endabschnitt (21) des ersten Elements (20) und der Endabschnitt (11) des zweiten Elements (10) gegeneinander anstoßen; und
einen Verbindungsschritt, bei dem Abschnitte des ersten und zweiten Elements (20) und (10), die gegeneinander anstoßen, verschweißt werden,
wobei der Anstoßschritt und der Verbindungsschritt nacheinander durchgeführt werden,
wobei
die Endplatte (20) ein Element ist, das einen Wulstabschnitt (38) aufweist, der als eine Ausstülpung konfiguriert ist, die sich in einer Position gegenüber dem Vorsprung (32) in Bezug auf den konkaven Abschnitt (31) radial nach außen wölbt.

2. Verfahren nach Anspruch 1, wobei
der Verbindungsschritt durch Schmelzen des Vorsprungs (32) des ersten Elements (20) während des Verschweißens durchgeführt wird.

3. Verfahren nach Anspruch 1 oder 2, wobei
der Endabschnitt (21) des ersten Elements (20) einen Positionierungsabschnitt (33) einschließt, der konfiguriert ist, um das erste Element (20) mit dem zweiten Element (10) auszurichten.

4. Verfahren nach Anspruch 3, wobei
der Positionierungsabschnitt (33) des Endabschnitts (21) des ersten Elements (20) ein winkelverändernder Abschnitt (34) ist, der einen ersten Abschnitt (33a) radial innerhalb der äußeren Umfangsoberfläche des Endabschnitts (11) des zweiten Elements (10) und einen zweiten Abschnitt (33b) radial außerhalb der äußeren Umfangsoberfläche aufweist, wobei der erste und der zweite Abschnitt (33a) und (33b) unterschiedliche Neigungswinkel aufweisen.

5. Tank, umfassend:
einen zylindrischen Körper (10); und
eine Endplatte (20), die zum Verschließen eines Endabschnitts (11) des Körpers (10) konfiguriert ist,
einen konkaven Abschnitt (31), der nahe einer Grenze zwischen dem Körper (10) und der Endplatte (20) so ausgebildet ist, dass er von einer äußeren Umfangsoberfläche des Körpers (10) oder der Endplatte (20) radial nach innen konkav ist,
**dadurch gekennzeichnet, dass**
die Endplatte (20) einen Wulstabschnitt (38) aufweist, der als eine Ausstülpung konfiguriert ist, die sich von der äußeren Umfangsoberfläche der Endplatte (20) radial nach außen wölbt.

6. Tank nach Anspruch 5, wobei
der konkave Abschnitt (31) auf der Endplatte (20) ausgebildet ist,
der konkave Abschnitt (31) an einem Endabschnitt (21) der Endplatte (20) so ausgebildet ist, dass ein Abstand (D) zwischen einer inneren Oberfläche und einem Mittelpunkt (C) des Endabschnitts (21) kürzer ist als ein Radius (r2) einer inneren Umfangsoberfläche des Endabschnitts (11) des Körpers (10),
**dadurch gekennzeichnet, dass**
der Endabschnitt (21) einen Vorsprung (32) einschließt, der so ausgebildet ist, dass ein offenes Ende (22) des Endabschnitts (21) der Endplatte (20) nach außen über eine äußere Umfangsoberfläche des Endabschnitts (11) des Körpers (10) hinaus vorspringt.

7. Tank nach Anspruch 6, wobei
der Endabschnitt (21) der Endplatte (20) einen Positionierungsabschnitt (33) einschließt, der konfiguriert ist, um die Endplatte mit dem Körper (10) auszurichten.

8. Tank nach Anspruch 7, wobei
der Positionierungsabschnitt (33) des Endabschnitts (21) der ersten Endplatte (20) ein winkelverändernder Abschnitt (34) ist, der einen ersten Abschnitt (33a) radial innerhalb der äußeren Umfangsoberfläche des Endabschnitts (11) des Körpers (10) und einen zweiten Abschnitt (33b) radial außerhalb der äußeren Umfangsoberfläche aufweist, wobei der erste und der zweite Abschnitt (33a) und (33b) unterschiedliche Neigungswinkel aufweisen.

## Revendications

1. Procédé de fabrication d'un réservoir (1), le réservoir (1) incluant un corps cylindrique (10) présentant une partie d'extrémité (11), et une plaque d'extrémité (20) présentant une partie d'extrémité (21), la partie d'extrémité (11) du corps de cylindre (10) et la partie d'extrémité (21) de la plaque d'extrémité (20) étant assemblées par soudage,
un premier parmi le corps (10) et la plaque d'extrémité (20) étant défini en tant que premier élément (20), l'autre étant défini en tant que second élément (10),
la partie d'extrémité (21) du premier élément (20) présentant une partie concave (31) et une saillie (32), la partie concave (31) étant formée de telle sorte qu'une distance entre une surface interne et un centre (C) du premier élément (20) est plus courte qu'un rayon (r2) d'une surface périphérique intérieure de la partie d'extrémité (11) du second élément (10), la saillie (32) étant formée de sorte qu'une extrémité ouverte (22) du premier élément (20) fait saillie vers l'extérieur au-delà d'une surface périphérique extérieure de la partie d'extrémité (11) du second élément (10), le procédé comprenant :
une étape de mise en butée consistant à amener la partie d'extrémité (21) du premier élément (20) et la partie d'extrémité (11) du second élément (10) à venir en butée l'une contre l'autre ; et
une étape de jonction de parties de soudage des premier et second éléments (20) et (10) venant en butée l'une contre l'autre,
l'étape de mise en butée et l'étape de jonction étant exécutées séquentiellement,
dans lequel
la plaque d'extrémité (20) est un élément présentant une partie de bord roulé (38) configurée sous la forme d'une saillie renflée radialement vers l'extérieur au niveau d'une position opposée à la saillie (32) par rapport à la partie concave (31).

2. Procédé selon la revendication 1, dans lequel
l'étape de jonction est réalisée par fusion de la saillie (32) du premier élément (20) lors d'un soudage.

3. Procédé selon la revendication 1 ou 2, dans lequel
la partie d'extrémité (21) du premier élément (20) inclut une partie de positionnement (33) configurée pour aligner le premier élément (20) avec le second élément (10).

4. Procédé selon la revendication 3, dans lequel
la partie de positionnement (33) de la partie d'extrémité (21) du premier élément (20) est une partie de changement d'angle (34) présentant une première partie (33a) radialement à l'intérieur de la surface périphérique extérieure de la partie d'extrémité (11) du second élément (10), et une seconde partie (33b) radialement à l'extérieur de la surface périphérique extérieure, les première et seconde parties (33a) et (33b) présentant des angles d'inclinaison différents.

5. Réservoir comprenant :
un corps cylindrique (10) ; et
une plaque d'extrémité (20) configurée pour fermer une partie d'extrémité (11) du corps (10),
une partie concave (31) étant formée près d'une limite entre le corps (10) et la plaque d'extrémité (20) de manière à être rendue concave radialement vers l'intérieur à partir d'une surface périphérique extérieure du corps (10) ou de la plaque d'extrémité (20),
**caractérisé en ce que**
la plaque d'extrémité (20) présente une partie de bord roulé (38) configurée sous la forme d'une saillie renflée radialement vers l'extérieur à partir de la surface périphérique extérieure de la plaque d'extrémité (20).

6. Réservoir selon la revendication 5, dans lequel
la partie concave (31) est formée sur la plaque d'extrémité (20),
la partie concave (31) est formée sur une partie d'extrémité (21) de la plaque d'extrémité (20), de sorte qu'une distance (D) entre une surface interne et un centre (C) de la partie d'extrémité (21) est plus courte qu'un rayon (r2) d'une surface périphérique intérieure de la partie d'extrémité (11) du corps (10),
**caractérisé en ce que**
la partie d'extrémité (21) inclut une saillie (32) formée de telle sorte qu'une extrémité ouverte (22) de la partie d'extrémité (21) de la plaque d'extrémité (20) fait saillie vers l'extérieur au-delà d'une surface périphérique extérieure de la partie d'extrémité (11) du corps (10).

7. Réservoir selon la revendication 6, dans lequel
la partie d'extrémité (21) de la plaque d'extrémité (20) inclut une partie de positionnement (33) configurée pour aligner la plaque d'extrémité avec le corps (10).

8. Réservoir selon la revendication 7, dans lequel
la partie de positionnement (33) de la partie d'extrémité (21) de la plaque d'extrémité (20) est une partie de changement d'angle (34) présentant une première partie (33a) radialement à l'intérieur de la surface périphérique extérieure de la partie d'extrémité (11) du corps (10), et une seconde partie (33b) radialement à l'extérieur de la surface périphérique extérieure, les première et seconde parties (33a) et (33b) présentant des angles d'inclinaison différents.
